# EUROPEAN PATENT SPECIFICATION

(11) **EP 3 684 663 B1**
(45) Date of publication and mention of the grant of the patent: **23.03.2022**
(21) Application number: 18750161.4
(22) Date of filing: 02.08.2018
(51) Int. Cl.: B60T 13/22, B60T 8/17, B60T 13/26, B60T 13/38

(54) **A TRACTOR-TRAILER BRAKE CONTROL CIRCUIT**
BREMSSTEUERKREIS FÜR ZUGFAHRZEUG-ANHÄNGERKOMBINATION
CIRCUITE DE CONTRÔLE DE FREIN POUR UNE COMBINAISON TRACTEUR-REMORQUE

(30) Priority: 03.08.2017 IT 201700089945
(43) Date of publication of application: 29.07.2020
(73) Proprietor: CNH Industrial Italia S.P.A., 10135 Turin (IT)
(72) Inventor: FEROLA, Gabriele, 27100 Pavia (PV) (IT); LUCENTE, Aldo, Modena (IT); VENTURINI, Giorgio, Bomporto (MO) (IT)
(74) Representative: CNH Industrial IP Department
(86) International application number: PCT/EP2018/070952
(87) International publication number: WO 2019/030105

(56) References cited:
- WO-A1-2014/096156
- US-A1- 2004 194 832

## Description

### FIELD OF THE INVENTION

The invention relates to a control circuit for controlling at least one break of a tractor-trailer combination.

### BACKGROUND OF THE INVENTION

In the field of automotive technology numerous combinations of tractors and trailers are known. Examples include agricultural tractors that are configured to tow e.g. wheeled grain or vegetable trailers, balers, mowers and beet harvesters; some forms of implement such as ploughs; and similar vehicles that do not themselves include sources of motive power and instead are reliant on tractive power generated in the tractor to cause them to be towed forwardly. Such a trailer usually is connected to the towing tractor by way of e.g. a hitch that permits pivoting of the trailer relative to the tractor about horizontal and vertical axes thereby causing the tractor-trailer combination to be articulated.

Other examples of tractor-trailer combinations include e.g. snow track and snow trailer combinations (in which one or both elements of the combination may be wheeled or tracked), so-called "multi-purpose" tractors that are used in agricultural applications to tow trailers of various kinds; snow piste conditioning vehicles sometimes referred to as piste bashers; and some construction and military vehicles. The invention relates to all such tractor-trailer combinations, and is of particular utility in combinations of agricultural tractors and trailers. The term "tractor-trailer combination" is used generally herein in relation to the combinations in which the invention is useable

In the early days of powered agricultural technology the trailers typically towed by tractors were generally un-braked. Instead braking of a tractor-trailer combination was effected through operation only of brakes fitted to the tractor. This however was quickly recognised as being potentially dangerous because of the tendency of an un-braked, heavily loaded trailer to *"jack-knife"*, that is to tend to overtake the slowing tractor with the result that skewing of the trailer about the towing hitch occurs.

This is nearly always a dangerous situation that tractor operators seek to avoid.

A further drawback of un-braked trailers is simply that the mass of the trailer and any load carried by it may be too much for the braking ability of the tractor. As a consequence it can be difficult to brake a tractor-trailer combination, in which the trailer is un-braked, in safe distances or in a predictable manner. In some cases it may even be impossible completely to arrest motion of the tractor-trailer combination using solely the brakes of the tractor.

As a result of problems such as the foregoing, towed trailers that are intended for anything more than light domestic use are required to include brakes that act on their wheels (or tracks if present), and the operation of which is co-ordinated with operation of the brakes of the towing vehicle (tractor). In a modern agricultural tractor-trailer combination, to which the invention primarily pertains, the tractor may be fitted with a pneumatic or hydraulic braking circuit that acts on the wheels of the tractor. Such a circuit is connectable to a further hydraulic or pneumatic braking circuit, as appropriate, that is operable to brake the wheels of the trailer in synchronism with activation of the tractor brake circuit.

In recent years the technology of trailer braking systems has increasingly been the subject of safety-related regulation. In consequence there is a constant impetus to improve the safety of braking systems of tractor-trailer combinations. The invention seeks in particular to improve the safety of braking systems in the event of failure of a primary component, namely a control fluid line used to modulate the application of a spring-applied trailer brake.

Spring-applied brakes are nowadays commonplace in trailers such as those towed by agricultural tractors. In such brakes a moveable piston in a brake cylinder is biased by a powerful spring to apply a brake pad to e.g. a brake disc. A hydraulic or pneumatic circuit pressurises the piston in a manner opposing the action of the spring thereby maintaining the brake in an off condition unless it is required to apply the brake.

In the latter case the hydraulic or pneumatic pressure is reduced or vented entirely with the result that the spring applies the brake. Reduction of the pneumatic or hydraulic pressure in this way is effected when e.g. a brake pedal in the tractor of the tractor-trailer combination is depressed by an operator or driver.

In one form of spring applied brake of this general kind the cylinder is pressurised with a constant pressure opposing the action of the spring on the piston. A control fluid line further applies pressure on the opposite side of the cylinder to that on which the constant pressure acts. Thus the variable fluid pressure applied via the control fluid line augments the effect of the spring.

Spring-applied brake of this kind exhibits good control characteristics. However in the event of failure of the control fluid line (as may happen if a hydraulic or pneumatic hose forming an essential part of the line becomes cut or punctured) it may be impossible to apply the brake since at such a time the constant pressure is likely to continue to apply and thereby balance the force of the spring. As a result the cylinder does not move from the off position of the brake and no braking effect is possible.

Patent application WO2014/096156 relates to a control circuit of a trailer for a tractor-trailer combination, in which two control lines are used for breaking the system when the tractor reaches different speed without providing a good safety control in case of failure one of such control line.

Scope of the present invention is to define an improved control circuit according to claim 1 for controlling at least one break of a tractor-trailer for improving the safety of a trailer brake in a tractor-trailer brake system, when the brake being of the spring activated - fluid release type.

### DISCLOSURE OF THE INVENTION

According to the invention in a broad aspect there is provided a control circuit with the features of claim 1.

An advantage of the foregoing arrangement over prior art spring-applied tractor-trailer brake control circuits is that failure of e.g. a hose forming part of the control line (or, for instance, a union or connector in the control fluid line) immediately results in depressurising of the supplementary fluid line. As a consequence the constant pressure opposing the action of the spring becomes vented, and the spring then biases the cylinder to the on, or applied, condition of the trailer brake. Thus an effective failure-safety arrangement is provided in an efficient manner.

For the avoidance of doubt, as used herein the phrase *"control circuit"* is intended to include as necessary the main components that constitute a braking arrangement. Thus a control circuit may include e.g. a number of fluid control lines connected in order to activate a brake including a moveable brake pad and a further braking component such as a brake disc, as well as any electrical parts (such as pressure-activated switches, referred to also as pressure switches, batteries or other sources of electrical power, relays and warning lamps) plus actuator members such as but not limited to brake pedals and parking brake levers or handles. More generally, as used herein *"control circuit"* is not necessarily limited to solely the parts such as hoses, valves and pumps constituting a hydraulic or pneumatic assembly used in a braking operation.

Preferably at least one said failure-safety valve is piloted by an electrical control signal generated in dependence on fluid pressure in the control fluid line. It is readily possible to arrange for sensing of the control fluid line pressure to give rise to an electrical signal that in turn is used to pilot the failure-safety valve.

To this end preferably the control circuit of the invention includes a pair of pressure switches that are acted on by pressure in the control fluid line; and an electrical relay connected to generate the electrical control signal, the pressure switches operating the electrical relay to generate the electrical control signal in dependence on the pressure of fluid in the control fluid line on operation of the at least one control member.

Such an arrangement may conveniently be configured using conventional subcomponents of fluid control circuits.

In preferred embodiments of the invention one of the said pressure switches is normally closed and is driven to an open circuit configuration when pressure in the control fluid line exceeds a threshold; and the other of the said pressure switches is normally open and is driven to a closed-circuit condition as a result of operation of the at least one control member.

The pressure threshold at which the normally closed switch is driven to an open circuit configuration may be set e.g. as a result of the design of the pressure switch in question. Thus the rating of a spring normally biasing a pressure plate of the switch to a closed position may be chosen to cause opening of the switch when the threshold pressure acts on the pressure plate.

Preferably the control circuit includes a pair of control members of the tractor and a shuttle valve connected to the said pair such that operation of either or both of the control members modulates the pressure of fluid in the control fluid line. When the tractor-trailer combination includes an agricultural tractor the pair of control members may be constituted as left and right brake pedals. The provision of left and right brake pedals is commonplace in agricultural tractors, and indeed in some other vehicles that could serve as tractors in tractor-trailer combinations, in order to permit the independent braking of the wheels on opposite sides of the tractor. The arrangement of the invention in preferred embodiments advantageously takes advantage of this characteristic of tractor-type vehicles.

In many agricultural tractors it is possible selectively to bolt the left and right brake pedals together so that pressing either of them results in depression of both brake pedals. In some other designs of tractor it is necessary for the operator to apply his feet respectively to the left and right brake pedals in order to operate both of them simultaneously. In either case the control circuit of the invention is configured such that when either or both the brake pedals is depressed modulation of fluid pressure in the trailer brake control fluid line occurs in order to control the application of the trailer brake.

Further preferably in such an embodiment the control circuit includes a pilot-operated valve for modulating pressure in the control fluid line, and the shuttle valve is connected to pilot the pilot-operated valve on operation of one or both of the control members.

Thus the modulation of pressure in the control fluid line beneficially may be arranged to result from fluid pressure generated as a result of depression of one or more of the control members of the tractor. Such an arrangement may be constructed using a minimal number of components.

As noted above, preferably the pair of control members include respectively a left brake pedal and a right brake pedal located for activation by an operator of the tractor.

The control circuit of the invention also conveniently may include a parking brake control member that is operable to pilot the failure-safety valve in order to cause venting of fluid pressure in the supplementary fluid line thereby causing the spring to apply the at least one said brake. Typically the parking brake control would be mounted on or otherwise form part of the tractor, and would be configured to activate a parking brake of the tractor in a conventional manner. In an advantageous feature of the invention the parking brake control member also may be arranged on activation to vent pressure from the supplementary fluid line thereby causing the spring to drive the trailer brake to its on or applied condition. Thus operation of a tractor parking brake may also automatically cause operation of the trailer brake, thereby improving overall the safety of the braking arrangement of a tractor-trailer combination.

Beneficially in this regard the parking brake control member generates an electrical signal that pilots the failure-safety valve. Other means of piloting the failure-safety valve on operation of the parking brake however also are possible within the scope of the invention.

In preferred embodiments of the invention the control circuit includes a proportional valve and a source of pressurised fluid that is connectable to the control fluid line via the proportional valve. Thus the modulation of pressure in the control fluid line may take place through the controlled application of pressure from e.g. a fluid pump that may be powered by the prime mover of the tractor.

More preferably the proportional valve is piloted by the shuttle valve. Thus the extent to which the pressure of fluid in the control fluid line is modulated may be determined in dependence on e.g. the extent to which one or both brake pedals of the tractor is/are depressed.

Preferably the control circuit of the invention may be configured as a hydraulic control circuit. In alternative embodiments of the invention the control circuit may be configured as a hydraulic-pneumatic (hybrid) control circuit. The control circuit also may be a hybrid of pneumatic and hydraulic sections; and as noted may also include electrical control components. The control circuit of the invention optionally may be connected to the electrical control of a tractor-trailer combination. Such an electrical control may include e.g. one or more programmable elements such as but not limited to a microprocessor that provides control commands in the tractor-trailer combination.

### BRIEF DESCRIPTION OF THE DRAWINGS

There now follows a description of preferred embodiments of the invention, by way of non-limiting example, with reference being made to the accompanying drawings in which:
Figure 1 is a schematic representation of a first embodiment of control circuit according to the invention, configured as an electro-hydraulic circuit; and
Figure 2 is a schematic representation of a second embodiment of control circuit according to the invention, configured as an electro-pneumatic circuit.

### DETAILED DESCRIPTION OF PREFERRED EMBODIMENTS

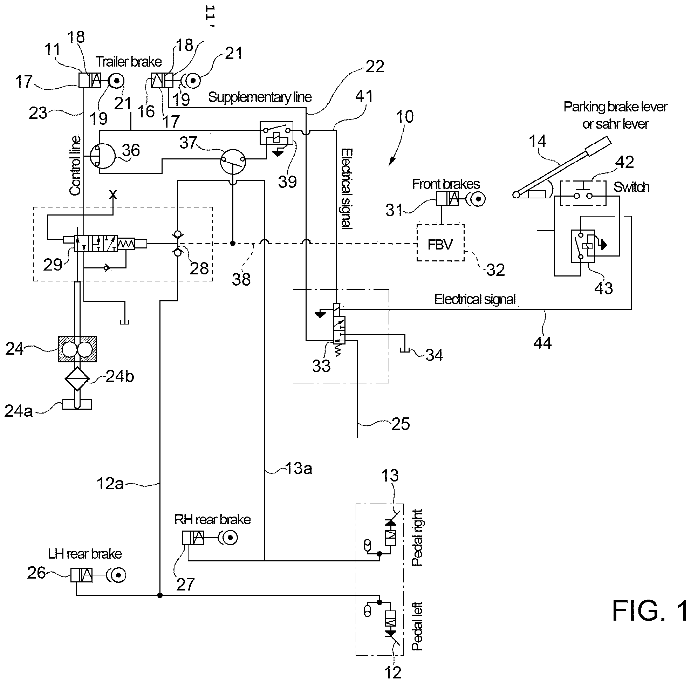

Referring to the drawings, in Figure 1 there is shown a hydraulic control circuit 10 for a brake 11 of a trailer of a tractor-trailer combination. The representation in Figure 1 is schematic and as a result the body, frame and wheels (or other ground-engaging members) of the tractor and trailer are omitted. Figure 1 therefore shows the main parts of a hydraulic circuit for controlling at least a first brake 11 of a trailer based on braking commands generated through operation of brake control members 12, 13, 14 located in the tractor. In the embodiment contemplated in Figure 1 the tractor is an agricultural tractor and the trailer is an unpowered, towed vehicle such as a grain trailer, baler or similar. However as noted herein other types of tractor-trailer combinations are possible within the scope of the invention.

In Figure 1 the trailer brake 11 is included twice. This is for ease of illustration, since otherwise it would be difficult to show all the parts of the trailer brake 11. In practice the parts of the trailer brake 11 such as the spring 16, cylinder 17 and piston 18 described below would be present as single parts of each such brake 11. For the avoidance of doubt however it should be realised that in a typical application two such brakes 11 may be present, acting respectively on the left and right wheel sets of a trailer. Through such an arrangement it is possible to effect braking of the wheels on the left and right hand sides of the trailer, left and right in this context being defined with reference to the direction of forward movement of the tractor-trailer combination.

The trailer in a typical application is connected to the tractor by way of a hitch such that pivoting of the trailer relative to the tractor about horizontal and vertical axes is possible. The hydraulic lines or hoses described below may be connected as between the tractor and the trailer by way of *per se* known, releasable hose unions and connectors.

The trailer brake 11 is of the spring-applied, hydraulic release (SAHR) type. Thus a spring 16 acts within a cylinder 17 on a piston 18 that is retained slidably captive in the cylinder 17.

The piston 18 is connected to a brake pad 19 and the spring 16 urges the brake pad 19 into engagement with a brake disc 21. In a typical arrangement the brake disc 21 is secured to and rotates with an axle or wheel of the trailer in which the trailer brake 11 is installed. The cylinder 17 is fixed to the frame of the trailer with the result that the tendency of the spring 16 to urge the brake pad 19 into engagement with the brake disc causes movement of the brake pad towards the brake disc that gives rise to braking of the wheel of the trailer to which the brake disc 21 is secured.

A hydraulic line 22, that is referred to herein as the supplementary fluid line, normally applies a constant hydraulic pressure to the opposite side of piston 18 to that on which the spring 16 acts. This hydraulic pressure is sufficient to oppose the action of the spring 16 with the result that under normal circumstances the brake pad 19 is held out of engagement with the brake disc 21, and the associated wheel is then un-braked.

The hydraulic pressure in supplementary fluid line 22 is generated as further described herein.

A control fluid (hydraulic) line 23 also applies hydraulic pressure to the piston 18. The control fluid line 23 applies hydraulic fluid pressure on the same side of the piston 18 as that acted on by the spring 16. Thus the pressure applied via the control fluid line 23 augments the effect of the spring 16 in urging the brake pad 19 into engagement with the brake disc 21.

Control fluid line 23 in contrast to supplementary fluid line 22 is not constantly pressurised. Instead the pressure of hydraulic oil in control fluid line 23 is modulated as further described herein in order to provide for controlled application of the brake 11. This occurs by reason of the combined effect of the force of spring 16 and the pressure of fluid in control fluid line 23 overcoming the effect of the hydraulic pressure applied via supplementary fluid line 22.

Pressure of fluid in the lines 22, 23 is generated as a result of operation of a hydraulic fluid pump 24. In a typical tractor-trailer combination the fluid pump 24 would be mounted on the tractor and powered by the engine of the tractor. The pump is supplied with hydraulic oil from a tank 24a via an in-line filter 24b. Such an arrangement in itself is conventional in vehicle hydraulics.

As is also conventional in the case of SAHR brakes if the engine of the tractor is switched off this de-powers the pump 24 and causes venting of hydraulic pressure in the supplementary line 22, as described below. As a result the spring 16 at such a time drives the brake pad 19 attached to the piston 18 into engagement with the brake disc 21 such that the SAHR brake becomes applied on de-powering of the engine of the tractor.

The pressure of fluid in the control fluid line 23 is modulated in dependence on the action of at least one control member of the tractor.

In the preferred embodiment of the invention shown in Figure 1 the tractor includes such control members in the form of two respective left and right brake pedals 12, 13 that may be of *per se* known designs and typically are similar or identical to one another.

In this regard it is commonplace in agricultural tractors to provide two brake pedals that are used respectively to operate brakes acting on the left and right hand sides of the vehicle. In some arrangements only the rear wheels of the tractor are braked in this way, and in some other tractor designs the front wheels also are braked through operation of the brake pedals. The reason for the provision of two brake pedals is to permit the braking of the left and right hand sides of the tractor independently of one another, as is often required e.g. when turning in a headland during ploughing operations.

In a tractor equipped with independently operated left and right hand brake pedals however it is also desirable to brake the wheels on both sides of the tractor simultaneously, for example when the tractor is being driven on roads. At such times it is possible to *"bolt"* the left and right brake pedals together. In older tractor designs this typically is acheived using a mechanical bolt but in more modern tractor designs software and/or hydraulic components may be employed such that the two brake pedals at such a time behave as a single pedal that activates the brakes on both sides of the tractor simultaneously.

Whether the brake pedals 12, 13 of the tractor are operated independently of one another or in synchronism it is necessary that the trailer brake 11 becomes operative when any attempt is made to brake the tractor. To this end in the Figure 1 arrangement each of the tractor brake pedals 12, 13 in addition to being connected to operate respective left and right tractor rear brake cylinders 26, 27 in a conventional manner also is connected via plot lines 12a, 13a to drive a shuttle valve 28.

Shuttle valve 28, that may be of a *per se* known design, is arranged to pilot a proportional valve 29 installed in-line in control fluid line 23 in a manner modulating the pressure of pumped fluid in control fluid line 23. The nature of the shuttle valve 28 is such that if either or both of the tractor brake pedals 12, 13 is depressed the piloting pressure increases with the result that the proportional valve 29 is moved from its neutral position in a manner increasing the hydraulic pressure in fluid control line 23.

As a result of this arrangement the pressure of hydraulic oil in control fluid line 23 may be modulated in dependence on operation of at least one control member of the tractor, namely one or both of the brake pedals 12, 13. During such modulation the pressure of fluid in the supplementary fluid line 22 remains constant by reason of the connection of the supplementary fluid line 22, by way of hydraulic line 25 to the pump 24.

In addition to the foregoing components the control circuit 10 includes optional features in the form of tractor front brakes represented schematically by reference numeral 31. In the embodiment of Figure 1 the tractor front brakes are supplied with hydraulic fluid under pressure from pump 24 in a *per se* known manner omitted from Figure 1 for clarity. The front brakes include a brake valve 32 operation of which is piloted via pilot line 38 from the shuttle valve 28 such that when either or both the tractor brake pedals 12, 13 is depressed the front brakes 31 are applied.

As noted above, in a prior art SAHR brake a potential problem arises in the event of a loss of hydraulic pressure in the control fluid line 23. Such a loss of pressure could result from a variety of causes, including failure of the material of a hose or union forming part of the line 23. In this regard agricultural tractors often are required to operate in harsh conditions that may make failures of hoses, unions and similar components comparatively likely. At such a time the constant hydraulic pressure in supplementary line 22 could prevent the application of the trailer brake.

The circuit of Figure 1 solves this problem through the inclusion of a failure safety valve that in the embodiment shown is an electrically piloted two-position valve 33, and that in other embodiments of the invention may take other forms. The purpose of the two-position valve 33 is to vent fluid pressure in supplementary fluid line 22 to tank 34 in the event of fluid pressure in control fluid line 23 collapsing as a result e.g. of puncturing of the line 23; or in the event of operation of the parking brake lever 14.

The control circuit 10 includes an electrical pressure sensing arrangement that senses the pressure of hydraulic fluid in control fluid line 23, and pilots two-position valve 33 in dependence on a reduction of such pressure.

In more detail, the circuit 10 includes two pressure sensing switches 36, 37 connected respectively to sense hydraulic fluid pressure in control fluid line 23 and the pilot line 38 of the shuttle valve 28.

Pressure switch 36 connected to control fluid line 23 is a normally closed switch including a pressure plate or pad that is acted on by pressure in the control fluid line 23. As a result the generation of pressure in control fluid line 23 drives the pressure switch 36 to an off or open circuit position.

Pressure switch 37 connected to pilot line 38 is of the normally open type. The generation of pressure in pilot line 38 therefore drives this switch to its on, or closed circuit, position.

The switches 36, 37 are connected to an electrical relay 39 that is connected to a voltage source in the tractor and thereby is responsible for generating the electrical pilot signal used to drive the failure-safety, two-position valve 33 (as represented by numeral 41). The relay is such that when both the pressure switches 36, 37 are in their closed circuit positions a piloting voltage is generated that drives the two-position valve 33 to its venting position that causes venting of hydraulic pressure in supplementary fluid line 22 to tank 34.

In operation of the circuit 10 under normal circumstances depression of either or both of the tractor brake pedals 12, 13 causes shuttling of shuttle valve 28 in a manner that pilots proportional valve 29. This in turn modulates the hydraulic pressure in control fluid line 23 in a manner augmenting the action of spring 16 and thereby causing the application of the trailer brakes 11.

At this time depressing of the brake pedals 12, 13 additionally applies one or both of the tractor rear brakes 26, 27 (depending on whether one or both pedals 12, 13 is depressed); and also applies the tractor front brakes 31 if these are fitted.

During such normal operation the pressure of fluid in control fluid line 23 maintains pressure switch 36 in its open circuit position. The piloting pressure in pilot line 38 meanwhile drives switch 37 to its closed circuit position. However this is not sufficient to cause relay 39 to generate a piloting electrical signal since both the switches 36, 37 must be in their closed positions for this to occur.

If while there is pressure in shuttle valve piloting line 38 a reduction in pressure in control fluid line 23 occurs however this causes closing of the switch 36, which therefore acts as a sensor of a fault such as a hose failure or puncture, a hose union leak or similar. At this time both the switches 36, 37 adopt their closed positions with the result that the relay 39 generates an electrical signal. This is transmitted via electrical line 41 to pilot two-position valve 33. Valve 33 then is driven to its venting position, exhausting the hydraulic pressure in supplementary fluid line 22. At this time there is no pressure to oppose the action of the spring 16, which therefore applies the SAHR trailer brake 11. Thus the trailer brake is applied in the event of a failure in the control fluid line, when one or both brake pedals is depressed but not at other times when there is no braking demand.

The handbrake lever 14 constitutes a further control member of the tractor that can be used to effect the safe application of the trailer brake 11.

In this regard the parking brake lever 14 is mechanically connected to an electrical switch 42 and relay 43 that are connected in an electrical circuit linked to the piloting of failure safety two-position valve 33. Pulling on the parking brake lever 14 gives rise to a voltage in electrical pilot line 44 that in like manner to a voltage in line 41 pilots the valve 33 to exhaust hydraulic fluid pressure in the supplementary line 22. Thus when the parking brake lever 14 is applied the spring 16 simultaneously applies the trailer brake 11. This is the case regardless of whether there is a fault in the control fluid line 23.

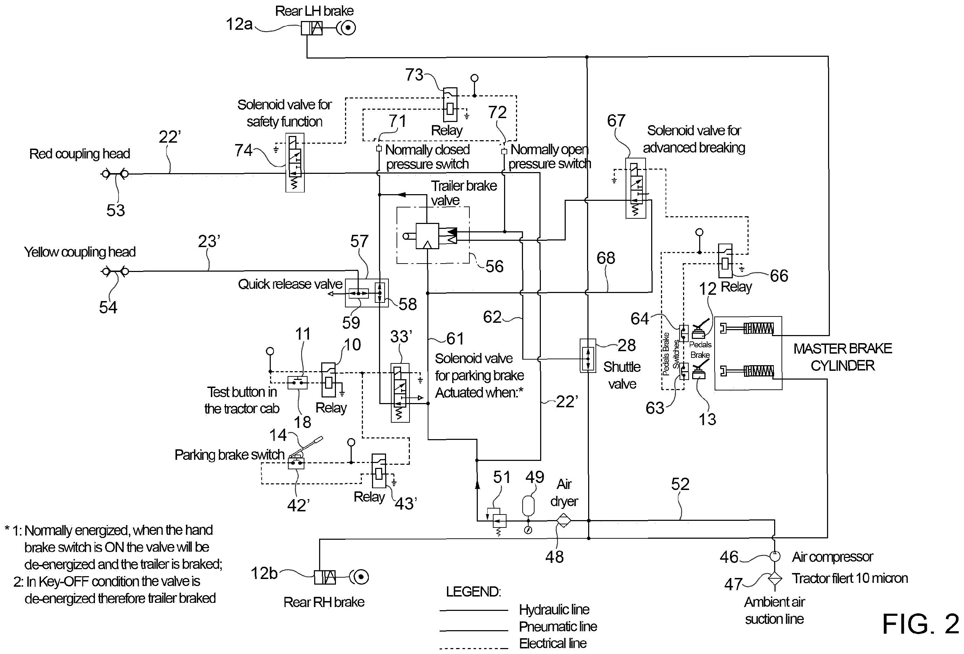

Referring now to Figure 2 there is shown in schematic form a variant on the control circuit of the invention that is intended to operate with pneumatic trailer brakes of the spring applied fluid release type. The control circuit 10' of Figure 2 is a hybrid circuit that accommodates the commonplace situation of a tractor equipped with hydraulic brakes being connected to tow a trailer having a pneumatic braking arrangement.

Trailer brakes of this type are invariably of the spring applied, fluid release type; but instead of the pressurised fluid being hydraulic oil as in the Figure 1 embodiment, in Figure 2 the trailer brakes are maintained in their off condition by compressed air.

In Figure 2 some components are functionally similar to counterpart components in Figure 1 and as necessary for a description of the Figure 2 embodiment of the invention are denoted using the same reference numerals as the corresponding Figure 1 components. In the following only the primary differences of the hydraulic-pneumatic circuit compared with the Figure 1 circuit are described in detail.

In a hydraulic braking circuit 10' of the kind shown in Figure 1 the fluid circuit is essentially a closed loop, with fluid being circulated by the pump 24 in the hydraulic lines via the tank 34 and thence to the operative parts of the circuit. In the pneumatic section of Figure 2 described below however the fluid circuit is an open loop. Thus the pneumatic circuit draws air from the atmosphere surrounding the vehicle (tractor, etc.) in which it is installed for compression in a compressor 46. When it is required to reduce pneumatic pressure in any particular pneumatic line in which this is possible this is achieved by venting the line in question to atmosphere. Thus the atmosphere surrounding the circuit in effect replaces the tank 34 of Figure 1; and the circuit 10' is connected differently in order to accommodate this difference.

A further difference of the Figure 2 illustration compared with Figure 1 is that the trailer brakes and the components associated with them, such as the brake cylinders, pistons, activation springs and brake pads are omitted for ease of illustration, and instead the connections of the pneumatic circuit to the trailer brake cylinders are shown. The trailer brakes however may be of *per se* known designs. In certain embodiments of the invention these may be similar to the Figure 1 trailer brakes except that the fluid pressures acting on the brake cylinders are pneumatic instead of hydraulic. Such modification of the trailer brakes as would be needed to accommodate these differences wil be familiar to the person of skill in the art.

In the circuit 10' of Figure 2, left and right tractor brake pedals 12, 13 are connected to vehicle rear hydraulic brake cylinders 12a and 13a in a *per se* known manner (that may also be employed in e.g. the Figure 1 embodiment) to provide for independent braking of at least the left and right rear wheels of the tractor. As in the case of the Figure 1 embodiment the brake pedals 12, 13 may in some embodiments of the invention be capable of being bolted together to provide for simultaneous braking of the left and right rear wheels.

Hydraulic pressure generated on operation of either or both the brake pedals 12, 13 is tapped for the purpose of piloting a hydraulically piloted pneumatic shuttle valve 28' that in functional terms operates similarly to the shuttle valve 28 of Figure 1.

Pneumatic compressor 46 is connected via an air filter 47 to atmospheric air. In one embodiment of the invention the air filter 47 is capable of filtering to remove from air entering compressor 46 all particles that are greater than 10 microns in their longest dimension. In other embodiments of the invention other designs of filter may be used. Theoretically the pneumatic part of the circuit 10' may operate in the absence of any filter; but in practice (as is well known) it is undesirable from the standpoint of reliability and component longevity to attempt this; and therefore virtually all practical pneumatic control arrangements include filters or are connectable to filters.

Compressor 46 compresses the filtered air fed to it via the filter 47 and supplies it in pneumatic line 52 via an air dryer 48, accumulator 49 and safety valve 51. These are conventional refinements of pneumatic air supply arrangements that do not require detailed description as their functions and characteristics are familiar to the person of skill in the art. Such components in theory could be dispensed with but in practice in like manner to the filter 47 are nearly always included.

Pneumatic line 52 connects to supplementary pneumatic line 22' the purpose of which is similar to supplementary line 22 of Figure 1. Thus supplementary pneumatic line 22' is permanently pressurised by the compressor 46 and delivers compressed air at constant pressure to a coupling head 53 that in turn feeds the opposite side of each trailer brake piston to that mounting the spring in each case. The air pressure in pneumatic line 22' thus opposes the action of the trailer brake springs and tends to maintain the trailer brakes in an off condition.

Compressed air in pneumatic line 52 also is fed via control pneumatic line 23' to the spring side of the piston of each trailer brake, by way of a further coupling head 54. Pneumatic pressure in this pneumatic line 23' however is modulated in dependence on the operation of one or both of the brake pedals 12, 13 or a handbrake 14.

In this regard pressure in line 52 also is fed via line 61 to a trailer brake valve 56 from which the pressure is fed back to a quick release valve 57. Quick release valve 57 is normally connected to supply compressed air in control line 23', but modulation may be achieved through operation of trailer brake valve 56.

Quick release valve 57 is configured as a pair of shuttle valves 58, 59. Shuttle valve 58 is connected between line 61 and the fed back pressure from trailer brake valve. Shuttle valve 58 is normally positioned such that no compressor pressure is fed to coupling head 54. Any imbalance in the pressure sensed by shuttle valve 57 however causes a change in the condition of shuttle valve 58, either thereby allowing compressor pressure to develop in line 23' or venting this line 23' by virtue of operation of shuttle valve 59.

Such a pressure imbalance is normally the result of the action of shuttle valve 28 or an electrical circuit connected to the brake pedals 12, 13.

In this regard if one of the pedals 12, 13 is operated the shuttle valve 28 shuttles with the result that a differential pressure is applied via pilot line 62 to control the trailer brake valve 56. Through shuttling of valve 58 this increases the air supply via quick release valve 57 and thereby increases the pressure applied on the spring side of each trailer brake. The effect of the pressure in line 22' is then overcome with the result that the trailer brakes are applied.

If on the other hand the brake pedals 12, 13 are bolted together, or are operated simultaneously, when they are depressed the shuttle valve 28 remains in its neutral position with the result that no additional pilot pressure is applied to the trailer brake valve 56. In this situation one or both of a pair of electrical switches 63, 64 respectively associated with the brake pedals 12, 13 activates a relay 66. This in turn electrically pilots a solenoid valve 67 connected in a feed forward control line 68 between line 61 and the trailer brake valve 56. Operation of the solenoid valve 67 also has the effect of adjusting the control pressure applied to the trailer brake valve 56, albeit pneumatically rather than hydraulically as is the case of piloting of the trailer brake valve 56 from shuttle valve 28 via line 62 as described.

Operation of the handbrake lever 14 visible in Figure 2 activates an electrical switch 42' that is essentially equivalent to switch 42 of Figure 1. This in turn operates electrical relay 43' (essentially equivalent to relay 43 of Figure 1) and causes this to pilot solenoid valve 33' (essentially equivalent to valve 33 of Figure 1). Piloting of valve 33' under such circumstances vents pressure in line 23' with the result that a low-pressure sensing circuit, described below, consisting of electrical switch 71, relay 73 and valve 74 is operated and causes venting of the supplementary pneumatic line 22'. As a result when the handbrake 14 is activated the springs of the trailer brakes apply.

A similar situation is created when the vehicle is de-powered (e.g. because of removal of an ignition key - which may be e.g. a conventional key or a so-called *"smart key"*- or for another reason). At such a time the valve 33' becomes depowered with the result that the trailer brakes become applied.

Pneumatic pressure respectively on the inlet and outlet sides of the trailer brake valve 56 is piloted to a pair of electrical switches 71, 72 forming part of a failure safety control circuit that also includes further electrical relay 73 and solenoid actuated pneumatic valve 74.

Electrical switch 71 is normally closed and is maintained in an open-circuit condition while there is pressure in control line 23'. Switch 72 is normally open and is driven to a closed-circuit position by pressure generated by shuttle valve 28. In like manner to the switches 36 and 37 of Figure 1 therefore the switches 71, 72 operate the relay 73 only when both the switches 71, 72 are in a closed-circuit configuration.

This arises when (a) at least one of the brake pedals 12, 13 is depressed and (b) there is no pressure in pneumatic line 23' (by reason of a hose or coupling failure, etc.).

In this situation the valve 74 is activated to vent supplementary line 22'. This depressurises the non-spring side of each trailer brake. As a consequence the trailer brakes become applied as a safety measure in the event of sensing of a pneumatic line failure in the trailer brake modulation circuit.

Thus in like manner to the Figure 1 arrangement the Figure 2 circuit avoids piloting of the solenoid actuated valve 74 in normal use.

Also in a similar manner to the Figure 1 circuit 10, in circuit 10' of Figure 2 parking brake lever 14 is mounted in e.g. the cab of the tractor.

In addition to the foregoing an optional feature of the invention as embodied in Figure 2 is a pushbutton that is mounted e.g. on the control panel in the cab of the tractor of the tractor-trailer combination. Pushbutton is connected to an electrical switch and relay that selectively pilot the solenoid operated valve 33'. Pushbutton and the related components permit testing of the braking ability of the system, and do not form part of the failure-safety aspects of the invention as claimed.

Overall the invention provides a low-cost and effective solution to the problem of trailer brake operation in the event of a range of faults occurring in a control line such as lines 23 and 23' of the embodiments of Figures 1 and 2. The invention improves the safety of spring-applied brakes used in tractor trailer combinations by eliminating the neutralising effect of fluid pressure in supplemental line 22 or line 22' in the event of a fault occurring in the control line 23 or 23'.

Preferences and options for a given aspect, feature or parameter of the invention should, unless the context indicates otherwise, be regarded as having been disclosed in combination with any and all preferences and options for all other aspects, features and parameters of the invention.

## Claims

1. A control circuit (10; 10') for a brake (11; 11') of a trailer for a tractor-trailer combination, the trailer including at least one brake (11;11') that is controllable from the tractor, the at least one brake (11;11') being of the spring applied fluid release type having a spring (16) biasing the at least one brake (11; 11') to an applied condition, said control circuit (10; 10') comprising
a control fluid line (23; 23') providing fluid pressure acting on the at least one brake (11; 11') to drive it to an applied condition;
and a supplementary fluid line (22; 22') providing fluid pressure acting on said at least one brake (11; 11') to oppose the action of the control fluid line (23; 23') and thereby biasing the said at least one brake (11; 11') to an off condition,
the pressure of fluid in the control fluid line (23; 23') being modulated in dependence on operation of at least one control member (12, 13, 14) of the tractor and the supplementary fluid line (22; 22') applying a constant fluid pressure in opposition to the action of the fluid pressure in the control fluid line (23; 23'), said control circuit (10; 10') further including one or more failure-safety valves (33; 33') being configured to cause venting of fluid pressure in the supplementary fluid line (22; 22') thereby causing the spring (16) to apply said at least one brake (11; 11'), when the fluid pressure in the control fluid line (23; 23') is below a threshold.

2. A control circuit (10; 10') according to claim 1 wherein said one or more failure-safety valves (33; 33') are piloted by an electrical control signal generated in dependence on the pressure of fluid in the control fluid line (23; 23').

3. A control circuit (10; 10') according to claim 2 including a pair of pressure switches (36, 37) that are acted on by pressure in the control fluid line (23; 23'); and an electrical relay (39) connected to generate the electrical control signal, the pressure switches (36, 37) configured to operate the electrical relay (39) to generate the electrical control signal in dependence on the pressure of fluid in the control fluid line (23; 23') on operation of said at least one control member (12, 13, 14).

4. A control circuit (10; 10') according to claim 3 wherein one (36) of the said pressure switches (36, 37) is normally closed and is driven to an open circuit configuration when pressure in the control fluid line (23; 23') exceeds a threshold; and wherein the other (37) of the said pressure switches is normally open and is driven to a closed-circuit condition as a result of operation of the at least one control member (12, 13, 14).

5. A control circuit (10; 10') according to any preceding claim including a pair of control members (12, 13) and a shuttle valve (28) connected to the said pair of control members (12, 13) such that operation of either one or both of the control members (12, 13) modulates the pressure of fluid in the control fluid line (23; 23').

6. A control circuit (10) according to claim 5 including a pilot-operated valve (29) for modulating pressure in the control fluid line (23), and wherein the shuttle valve (28) is connected to pilot the pilot-operated valve (29) on operation of one or both of the pair of control members (12, 13).

7. A control circuit (10; 10') according to claim 5 or claim 6 wherein the pair of control members (12, 13) are connectable to respectively a left brake pedal (12) and a right brake pedal (13) of a tractor for activation by an operator.

8. A control circuit (10; 10') according to any preceding claim including a parking brake control member (14) that is operable to pilot the failure-safety valve (33; 33') causing venting of fluid pressure in the supplementary fluid line (22; 22') thereby further causing the spring to apply said at least one brake (11; 11').

9. A control circuit (10; 10') according to claim 8 wherein the parking brake control member (14) generates an electrical signal for piloting the failure-safety valve (33; 33').

10. A control circuit (10; 10') according to claim 8 or claim 9 wherein the parking brake control member (14) is located on a tractor of the tractor-trailer combination.

11. A control circuit (10) according to any preceding claim including a proportional valve (29) and a source (24) of pressurised fluid that is connectable to the control fluid line (23) via the proportional valve (29).

12. A control circuit (10) according to claim 11 when dependent from claim 5 wherein the proportional valve (29) is piloted by the shuttle valve (28).

13. A control circuit (10; 10') according to any preceding claim further including electrical control of a tractor-trailer combination.

14. A tractor including a control circuit (10; 10') according to any preceding claim

## Patentansprüche

1. Steuerkreis (10; 10') für eine Bremse (11; 11') eines Anhängers einer Traktor-Anhänger-Kombination, wobei der Anhänger mindestens eine Bremse (11; 11') umfasst, die von dem Traktor steuerbar ist, wobei die mindestens eine Bremse (11; 11') von der federbetätigten, fluidisch gelösten Bauart ist, die eine Feder (16) aufweist, die die mindestens eine Bremse (11; 11') in einen betätigten Zustand vorspannt, wobei der Steuerkreis (10; 10') aufweist
eine Steuerfluidleitung (23; 23'), die Fluiddruck bereitstellt, der auf die mindestens eine Bremse (11; 11') wirkt, um sie in einen betätigten Zustand zu bringen;
und eine Hilfsfluidleitung (22; 22'), die Fluiddruck bereitstellt, der auf die mindestens eine Bremse (11; 11') wirkt, um der Wirkung der Steuerfluidleitung (23; 23') entgegenzuwirken und die mindestens eine Bremse (11; 11') in einen unbetätigten Zustand vorzuspannen,
wobei der Fluiddruck in der Steuerfluidleitung (23; 23') in Abhängigkeit von der Betätigung mindestens eines Steuerelements (12, 13, 14) des Traktors angepasst wird und die Hilfsfluidleitung (22; 22') einen konstanten Fluiddruck gegen den Fluiddruck in der Steuerfluidleitung (23; 23') ausübt, wobei der Steuerkreis (10; 10') ein oder mehrere Ausfall-Sicherheitsventile (33; 33') umfasst, die dazu eingerichtet sind, Fluiddruck in der Hilfsfluidleitung (22; 22') abzulassen, um dadurch zu bewirken, dass die Feder (16) die mindestens eine Bremse (11; 11') betätigt, wenn der Fluiddruck in der Steuerfluidleitung (23; 23') unter einem Grenzwert liegt.

2. Steuerkreis (10; 10') nach Anspruch 1, wobei das eine oder die mehreren Ausfall-Sicherheitsventile (33; 33') von einem elektrischen Steuersignal gesteuert werden, das in Abhängigkeit von dem Fluiddruck in der Steuerfluidleitung (23; 23') erzeugt wird.

3. Steuerkreis (10; 10') nach Anspruch 2, umfassend ein Paar von Druckschaltern (36, 37), die durch Druck in der Steuerfluidleitung (23; 23') betätigt werden, und ein elektrisches Relais (39), das angeschlossen ist, um das elektrische Kontrollsignal zu erzeugen, wobei die Druckschalter (36, 37) dazu eingerichtet sind, das elektrische Relais (39) zu betätigen, um das elektrische Kontrollsignal in Abhängigkeit von dem Fluiddruck in der Steuerfluidleitung (23; 23') bei Betätigung des mindestens einen Steuerelements (12, 13, 14) zu erzeugen.

4. Steuerkreis (10; 10') nach Anspruch 3, wobei einer (36) der Druckschalter (36, 37) normalerweise geschlossen ist und in eine geöffnete Schaltungsanordnung gestellt wird, wenn der Druck in der Steuerfluidleitung (23; 23') einen Grenzwert überschreitet; und wobei der andere (37) der Druckschalter normalerweise geöffnet ist und infolge der Betätigung des mindestens einen Steuerelements (12, 13, 14) in eine geschlossene Schaltungsanordnung gestellt wird.

5. Steuerkreis (10; 10') nach einem der vorangehenden Ansprüche, umfassend ein Paar von Steuerelementen (12, 13) und ein Wechselventil (28), das mit dem Paar von Steuerelementen (12, 13) verbunden ist, sodass die Betätigung eines der beiden oder beider Steuerelemente (12, 13) den Fluiddruck in der Steuerfluidleitung (23; 23') anpasst.

6. Steuerkreis (10) nach Anspruch 5, umfassend ein vorgesteuertes Ventil (29) zum Modulieren von Druck in der Steuerfluidleitung (23), und wobei das Wechselventil (28) angeschlossen ist, um das vorgesteuerte Ventil (29) bei Betätigung eines oder beider des Paares von Steuerelementen (12, 13) zu steuern.

7. Steuerkreis (10; 10') nach Anspruch 5 oder 6, wobei das Paar von Steuerelementen (12, 13) zur Aktivierung durch einen Bediener mit einem linken Bremspedal (12) bzw. einem rechten Bremspedal (13) eines Traktors verbindbar sind.

8. Steuerkreis (10; 10') nach einem der vorangehenden Ansprüche, umfassend ein Feststellbremsen-Steuerelement (14), das betätigbar ist, um das Ausfall-Sicherheitsventil (33; 33') zu steuern, das das Ablassen von Fluiddruck in der Hilfsfluidleitung (22; 22') bewirkt, um weiterhin zu bewirken, dass die Feder die mindestens eine Bremse (11; 11') betätigt.

9. Steuerkreis (10; 10') nach Anspruch 8, wobei das Feststellbremsen-Steuerelement (14) ein elektrisches Signal zum Steuern des Ausfall-Sicherheitsventils (33; 33') erzeugt.

10. Steuerkreis (10; 10') nach Anspruch 8 oder 9, wobei sich das Feststellbremsen-Steuerelement (14) an einem Traktor der Traktor-Anhänger-Kombination befindet.

11. Steuerkreis (10) nach einem der vorangehenden Ansprüche, umfassend ein Proportionalventil (29) und eine Quelle (24) für verdichtetes Fluid, die über das Proportionalventil (29) mit der Steuerfluidleitung (23) verbindbar ist.

12. Steuerkreis (10) nach Anspruch 11 in Abhängigkeit von Anspruch 5, wobei das Proportionalventil (29) von dem Wechselventil (28) gesteuert wird.

13. Steuerkreis (10; 10') nach einem der vorangehenden Ansprüche, weiterhin umfassend eine elektrische Steuerung einer Traktor-Anhänger-Kombination.

14. Traktor mit einem Steuerkreis (10; 10') nach einem der vorangehenden Ansprüche.

## Revendications

1. Circuit de commande (10, 10') de frein (11, 11') d'une remorque pour ensemble tracteur-remorque, la remorque comprenant au moins un frein (11, 11') commandable depuis le tracteur, l'au moins un frein (11, 11') étant de type à libération de fluide à ressort doté d'un ressort (16) sollicitant l'au moins un frein (11, 11') dans une position appliquée, ledit circuit de commande (10, 10') comprenant
une conduite de fluide de commande (23, 23') fournissant une pression fluidique agissant sur l'au moins un frein (11, 11') pour l'amener dans une position appliquée ;
et une conduite de fluide supplémentaire (22, 22') fournissant une pression fluidique sur ledit au moins un frein (11, 11') pour s'opposer à l'action de la conduite de fluide de commande (23, 23') et sollicitant ainsi ledit au moins un frein (11, 11') dans une position d'arrêt,
la pression fluidique dans la conduite de fluide de commande (23, 23') étant modulée en fonction du fonctionnement d'au moins un élément de commande (12, 13, 14) du tracteur et la conduite de fluide supplémentaire (22, 22') appliquant une pression fluidique constante en opposition à l'action de la pression fluidique dans la conduite de fluide de commande (23, 23'), ledit circuit de commande (10, 10') comprenant en outre une ou plusieurs soupapes de sécurité-défaillance (33, 33') étant configurée(s) pour évacuer la pression fluidique dans la conduite de fluide supplémentaire (22, 22'), amenant le ressort (16) à appliquer ledit au moins un frein (11, 11') lorsque la pression fluidique dans la conduite de fluide de commande (23, 23') est inférieure à un seuil.

2. Circuit de commande (10, 10') selon la revendication 1, dans lequel ladite une ou lesdites plusieurs soupapes de sécurité-défaillance (33, 33') sont actionnées par un signal de commande électrique généré en fonction de la pression fluidique dans la conduite de fluide de commande (23, 23').

3. Circuit de commande (10, 10') selon la revendication 2, comprenant une paire de pressostats (36, 37) déclenchée par la pression dans la conduite de fluide de commande (23, 23') ; et un relais électrique (39) connecté pour générer le signal de commande électrique, les pressostats (36, 37) étant configurés pour que le relais électrique (39) génère le signal de commande électrique en fonction de la pression fluidique dans la conduite de fluide de commande (23, 23') sur le fonctionnement dudit au moins un élément de commande (12, 13, 14).

4. Circuit de commande (10, 10') selon la revendication 3, dans lequel l'un (36) desdits pressostats (36, 37) est normalement fermé et amené dans une configuration de circuit ouvert lorsque la pression dans la conduite de fluide de commande (23, 23') est supérieure à un seuil ; et dans lequel l'autre (37) desdits pressostats est normalement ouvert et amené en position de circuit fermé à la suite du fonctionnement de l'au moins un élément de commande (12, 13, 14).

5. Circuit de commande (10, 10') selon l'une quelconque des revendications précédentes, comprenant une paire d'éléments de commande (12, 13) et une soupape à deux voies (28) connectée à ladite paire d'éléments de commande (12, 13) de manière à ce que le fonctionnement d'un ou des deux éléments de commande (12, 13) module la pression fluidique dans la conduite de fluide de commande (23, 23').

6. Circuit de commande (10) selon la revendication 5, comprenant une soupape pilotée (29) pour moduler la pression dans la conduite de fluide de commande (23), et dans lequel la soupape à deux voies (28) est connectée pour piloter la soupape pilotée (29) sur le fonctionnement d'un ou deux d'éléments de commande (12, 13).

7. Circuit de commande (10, 10') selon la revendication 5 ou 6, dans lequel la paire d'éléments de commande (12, 13) peut être connectée respectivement à la pédale de frein gauche (12) et à la pédale de frein droite (13) d'un tracteur pour être activée par un opérateur.

8. Circuit de commande (10, 10') selon l'une quelconque des revendications précédentes, comprenant un élément de commande du frein de stationnement (14) qui est actionnable pour piloter la soupape de sécurité-défaillance (33, 33') provoquant l'évacuation de pression fluidique dans la conduite de fluide supplémentaire (22, 22') amenant en outre le ressort à appliquer ledit au moins un frein (11; 11').

9. Circuit de commande (10, 10') selon la revendication 8, dans lequel l'élément de commande du frein de stationnement (14) génère un signal électrique pour piloter la soupape de sécurité-défaillance (33, 33').

10. Circuit de commande (10; 10') selon la revendication 8 ou 9, dans lequel l'élément de commande du frein de stationnement (14) est situé sur un tracteur de l'ensemble tracteur-remorque.

11. Circuit de commande (10) selon l'une quelconque des revendications précédentes, comprenant une soupape proportionnelle (29) et une source (24) de fluide pressurisé qui peut être connectée à la conduite de fluide de commande (23) via la soupape proportionnelle (29).

12. Circuit de commande (10) selon la revendication 11, lorsqu'il dépend de la revendication 5 dans lequel la soupape proportionnelle (29) est pilotée par la soupape à deux voies (28).

13. Circuit de commande (10, 10') selon l'une quelconque des revendications précédentes, comprenant en outre une commande électrique d'un ensemble tracteur-remorque.

14. Tracteur comprenant un circuit de commande (10; 10') selon l'une quelconque des revendications précédentes.
